(19) Europäisches Patentamt
European Patent Office
Office européen des brevets

(11) **EP 1 976 345 A1**

(12) **EUROPEAN PATENT APPLICATION**
published in accordance with Art. 158(3) EPC

(43) Date of publication:
**01.10.2008 Bulletin 2008/40**

(21) Application number: **07706862.5**

(22) Date of filing: **10.01.2007**

(51) Int Cl.:
*H05H 1/24* (2006.01)   *A62D 3/19* (2007.01)
*A62D 101/20* (2007.01)   *A62D 101/22* (2007.01)
*A62D 101/47* (2007.01)   *B01D 53/86* (2006.01)
*B01J 19/08* (2006.01)   *C01B 3/38* (2006.01)
*C04B 38/00* (2006.01)

(86) International application number:
**PCT/JP2007/050535**

(87) International publication number:
**WO 2007/081032 (19.07.2007 Gazette 2007/29)**

(84) Designated Contracting States:
**DE FR GB**

(30) Priority: **11.01.2006   JP 2006004008**

(71) Applicant: **NGK Insulators, Ltd.**
**Nagoya-shi, Aichi 467-8530 (JP)**

(72) Inventors:
• **TAKAHASHI, Michio**
  **Aichi 467-8530 (JP)**

• **KONDOU, Atsuo**
  **Aichi 467-8530 (JP)**
• **MORI, Nobuhiko**
  **Aichi 467-8530 (JP)**

(74) Representative: **Paget, Hugh Charles Edward et al**
**Mewburn Ellis LLP**
**York House**
**23 Kingsway**
**London WC2B 6HP (GB)**

(54) **ELECTRODE DEVICE FOR PLASMA DISCHARGE**

(57)     It is disclosed a plasma discharging electrode device generating non-equilibrium plasma for treating a gas. The device has a substrate comprising an integrated sintered ceramic body; an electrode embedded in said substrate; and a catalyst supported by said substrate and accelerating the reaction of the gas. The substrate has a surface portion whose porosity is higher than that of a portion in the vicinity of the electrode in the substrate.

Fig. 2

EP 1 976 345 A1

**Description**

FIELD OF THE INVENTION

The present invention relates to a plasma discharging electrode device.

BACKGROUND ARTS

As a method for decomposing a volatile organic compound (VOC) such as benzene or toluene, a hazardous substance such as NOX, SOX, dioxin, or polychlorinated biphenyl (PCB), or a high global warming potential gas such as $SF_6$, $CF_4$, $NF_3$, or $N_2O$, or as a method for generating hydrogen or lower molecular weight hydrocarbon by reforming hydrocarbon-based fuel, natural gas or the like, a catalyst has been conventionally used alone. In a case where a catalyst is used alone, high temperature has been needed to activate the catalyst, whereas a method of utilizing non-equilibrium plasma (low-temperature plasma) has been recently known as a method for producing a reaction (intermediate) product through decomposition processing on a low-temperature side. In the method of utilizing non-equilibrium plasma, only electron energy (electron temperature) is high, and ion energy and molecular energy are low. Therefore, decomposition processes can be conducted at low temperatures by injecting electrons, radicals or active species, and processes comparable to conventional thermochemical treatment can be introduced, whereby the downsizing, weight reduction, etc. of treatment apparatus can be achieved.

Japanese Patent Publication No. 2005-144445A discloses a gas treatment apparatus using such non-equilibrium plasma and supporting both ordinary gas treatment catalyst and photocatalyst. A surface of its substrate is supported with a solid substance such as a catalyst.

Japanese Patent Publication No. 2004-237135A discloses a gas treatment apparatus using non-equilibrium plasma and counter electrodes.

In Japanese Patent Publication No. H11-347342A, mesh electrodes are coated with dielectrics; and besides the dielectrics are coated with catalyst-supported zeolite.

Japanese Patent Publication Nos. 2005-35852A and 2005-170744A each disclose a method in which a hydrogen-rich atmosphere is produced by treating a hydrocarbon fuel with non-equilibrium plasma.

DISCLOSURE OF THE INVENTION

However, in the structures of conventional plasma discharging electrode devices, when a power has been supplied to each internal electrode, energy loss within each substrate is still high, and the rate of conversion to thermal energy made within the substrate is high. Because of this, there are growing demands to reduce energy loss within the substrate, further enhance gas treatment efficiency, and avoid problems due to heat generated in the substrate.

An object of the present invention is to provide a plasma discharging electrode device which generates non-equilibrium plasma to treat gas, reduce energy loss within its substrate, and further enhance its gas treatment efficiency.

The present invention provides a plasma discharging electrode device generating non-equilibrium plasma to treat a gas. The device comprises a substrate comprising an integrated solid sintered ceramic body, an electrode embedded in the substrate and a catalyst supported by the substrate and accelerating the reaction of gas. The porosity of the substrate surface is higher than that of a portion near the electrode in the substrate.

According to the present invention, the substrate is used in the form of such a solid sintered ceramic body, and the porosity of the portion near the substrate surface is relatively increased. By increasing the porosity of the portion near the substrate surface, the quantity of the catalyst supported in the portion near the surface can be increased and microplasma discharges can be induced within the pores, whereby an even and high-density plasma can be generated extensively. And further, since the porosity of the portion near the electrode is low, its energy loss is low.

In addition, since the substrate surface and the portion near the electrode are joined together as such an integrated sintered ceramic body, it is possible to prevent energy loss caused at the boundary between the catalytic activity layer, i.e., the surface layer and the portion near the electrode, whereby energy efficiency during gas treatment can be significantly improved. In Japanese Patent Publication No. H11-347342A, since the dielectric substrate is covered with the catalyst support such as zeolite, there is a definite boundary between the dielectric substrate and the catalyst support, and therefore there is a physical and structural discontinuity between them. Because of this, its energy loss is high, and much of its supplied energy tends to be converted to heat. And furthermore, the present invention is applicable to the treatment of reaction products and gases with ordinary catalysts.

BRIEF DESCRIPTION OF THE DRAWINGS

Fig. 1 is a schematic illustration of a plasma reactor.
Fig. 2 is a schematic diagram of a plasma discharging electrode device 16.

BEST MODES FOR CARRYING OUT THE INVENTION

The present invention will be described in further detail below with suitable reference to the drawings.

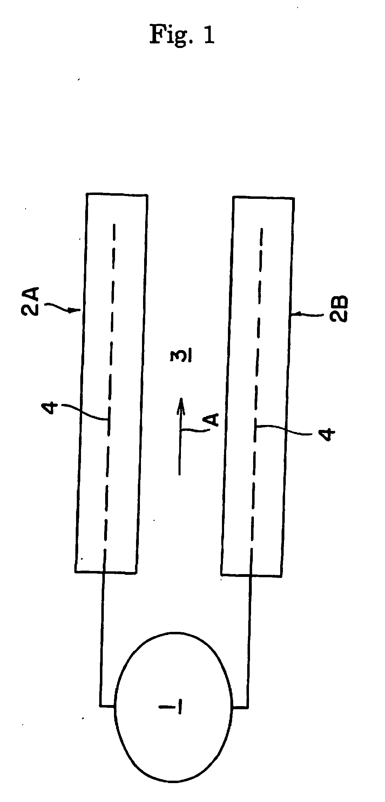

Fig. 1 is a schematic illustration of a gas treatment apparatus to which the present invention can be applied. The embodiment of the present invention is concerned with a so-called counter electrode-type apparatus. Non-equilibrium plasma is generated in a space 3 between a pair of electrode devices 2A and 2B opposite to each other, and then, a gas is supplied into the space as indicated by the arrow A to conduct a specified treatment. Within each electrode device, an electrode 4 is embedded. Reference numeral 1 denotes a power source.

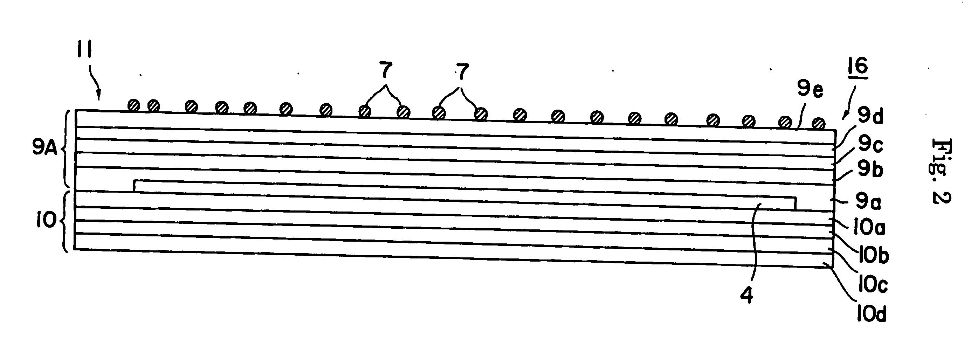

Fig. 2 is a schematic diagram of the plasma discharging electrode device according to the embodiment of the present invention. No cross-sectional hatching is shown for the sake of brevity.

In the plasma discharging electrode device 16 of Fig. 2, the electrode 4 is embedded in a substrate 11. On the electrode 4, a front-surface layer 9A is formed; under the electrode 4, a rear-surface layer 10 is formed. In this embodiment, the substrate 11 is made by means of a green sheet molding method, and the front-surface and rear-surface layers each comprise a plurality of layers. The rear-surface layer 10 comprises layers 10a, 10b, 10c, and 10d from the electrode 4 to the bottom; the front-surface layer 9A comprises layers 9a, 9b, 9c, 9d, and 9e from the electrode 4 to the surface. On the layer 9e, catalyst particles 7 are fixed; or the catalyst particles 7 can be dispersively impregnated into the substrate.

There are no limitations on the kind of ceramic used to form the substrate in particular; preference is given to alumina, zirconia, silica, mullite, spinel, cordierite, aluminium nitride, silicon nitride, titanium-barium-based oxide, barium-titanium-zinc-based oxide, or the like. Also, there are no limitations on a material for the electrode in particular, and therefore any material can be used provided that it has predetermined electrical conductivity. Preferred examples of such a material include tungsten, molybdenum, manganese, titanium, chromium, zirconium, nickel, silver, iron, copper, platinum, palladium, and the alloys thereof.

The porosity of the substrate surface portion is preferably 20% or higher, more preferably 30% or higher in terms of the effect of the invention. And further, in the case where the porosity of the substrate surface portion is too high, the durability of the surface portion decreases, and therefore the porosity is preferably 50% or lower, more preferably 40% or lower.

The porosity of a portion in the vicinity of the internal electrode is preferably 5% or lower, more preferably 2% or lower in terms of the effect of the invention. There is no lower limit to the porosity of the portion in particular; the lower the porosity is, the higher its energy efficiency is. Therefore the lower limit of the porosity is 0%.

In this substrate, the difference in porosity between the portion near the surface and the portion near the electrode is preferably 15% or higher, more preferably 25% or higher in terms of the effect of the invention.

The porosity of the portion near the surface of the substrate refers to the porosity of a sample piece taken from a region at a depth within 0.1 mm of the surface, and is measured by means of the Archimedes method. The porosity of the portion in the vicinity of the electrode in the substrate refers to the porosity of a sample piece taken from a region at a distance within 0.1 mm from the electrode, and is measured by means of the Archimedes method.

The porosity of an intermediate region between the portion near the substrate surface and the portion near the electrode is not limited in particular. However, the porosity of the intermediate region is preferably that of the portion near the electrode or more and that of the portion near the substrate surface or less. In this case, the porosity of the intermediate region may be the same as those of the portion near the substrate surface or the portion near the electrode.

In particular preferably, the porosity of the intermediate region is higher than that of the portion near the electrode and lower than that of the surface region. In this case, the substrate can also be designed such that the porosity of the intermediate region increases as the surface region approaches. In that case, a so-called a gradient porosity structure is formed.

The substrate is in the form of an integrated sintered ceramic body. The ceramic body refers to a sintered body produced by sintering an integrated body to be sintered such as a molded ceramic body, a degreased body, or a ceramic body.

There are no limitations on the method for producing the substrate in particular.

Such a substrate can be produced by means of, for example, a green sheet laminating method. That is, a method can be used in which when press-molding a ceramic powder, a metallic plate or metallic foil forming an embedded electrode is embedded in the powder, and then they are sintered together. And further, the electrode can also be made by applying a paste onto a ceramic green sheet. As an application method used in this case, any application method can be used such as screen printing, calendar roll printing, dipping, vapor deposition, or physical vapor growth. In the case where the electrode is made by means of such an application method, a powder of the foregoing metals or alloys is mixed with an organic binder and a solvent (such as terpineol) to give a conductive paste, and then, the conductive paste is applied onto a ceramic green sheet.

When producing the substrate, there are no limitations on a method for forming the ceramic green sheet in particular; any method can be used such as doctor blading, calendaring, printing, roll coating, or plating. And further, as powdery raw material of the green sheet, any one of the foregoing various ceramic powders and powders of glass and so on can be used. At this time, a sintering aid can be used; examples thereof include silicon oxide, calcia, titania, magnesia and zirconia. Preferably, the sintering aid is added in an amount of 3 to 10 weight parts per 100 weight parts of the ceramic powder. To the ceramic slurry, a well known dispersant, plasticizer and organic solvent can be added.

The substrate can also be produced by means of powder press molding. In the case where a mesh metal or metallic foil is used as the electrode to be embedded, a sintered body can be obtained in which the electrode is embedded therein by means of hot pressing.

By suitably selecting a molding auxiliary, a molded body as the substrate can also be produced by means of extrusion molding. By suitably selecting a solvent, a metal paste as a conductive film component can be formed onto the surface of the extruded piece as an electrode by means of printing or the like.

In the case where the substrate is formed and sintered as described above, there are no limitations on a method for changing the porosity of each layer; the following can be taken as examples of such a method.

(1) After the formation of the layer to be contacted with the electrode, the layer is dried at a predetermined temperature for a time, and then the surface layer is formed thereon and dried. By setting the drying temperature for the electrode contacting layer higher than that for the surface layer at this time, the electrode contacting layer is dried faster, and hence tends to be densified. Therefore, the porosity of the layer near the electrode is relatively low, whereas the porosity of the surface layer is relatively high.

(2) To the layer near the electrode, a pore-forming agent is not added; to the surface layer, a pore-forming agent is added. Thus, the porosity of the surface layer can be made higher than that of the layer near the electrode, provided that both layers are identical in components other than the pore-forming agent. Examples of such pore-forming agents include carbon, cellulosic resin, and wood powder.

A catalyst can be mixed into the materials forming the substrate to be embedded therein; or the substrate can be supported by the catalyst at its surface. Preferably, as described above, the catalyst particles are impregnated or dispersed into the substrate.

In order to support the substrate by using the catalyst, a slurry containing the catalyst particles is prepared, and then the slurry is applied onto or impregnated into the substrate, and then the slurry is dried and sintered; or the catalyst particles are contained in the ceramic green sheet-molded body.

According to the present invention, there are no limitations on the planar pattern of each electrode in particular; therefore they can be designed in accordance with the type of the catalyst and the type of the reaction. For example, the planar pattern of the electrodes may be in the shape of a comb or a grid.

When the electrode is in the shape of a net or a comb, it is easy to form through holes into the shape of a mesh or to regularly form through holes between the tooth portions of the comb-shaped electrode, and therefore it is preferable to take such a shape. In this embodiment, there are no limitations on the shape of the mesh holes in particular; they may be in the shape of a circle, ellipse, racetrack, polygon such as a quadrilateral or triangle, or the like. Also, there are no limitations on the shape of the tooth portions of the comb-shaped electrode in particular; it is particularly preferable that the tooth portions be each in the shape of a rectangle or parallelogram.

According to the present invention, there are no limitations on a method for treating a gas in particular. For example, a noxious gas can be made harmless by using non-equilibrium plasma. And further, oxygen can be generated by treating a hydrocarbon gas; and besides a reaction (intermediate) product, such as a hydrocarbon with a small carbon number (lower molecular weight hydrocarbon), can be produced.

There are no limitations on the kinds of such noxious gas to be treated, examples of which include volatile organic compounds (VOC) such as benzene and toluene, exhaust gases such as $NO_x$ and $SO_x$, exhaust gases containing harmful chemical substances such as dioxin, harmful substances such as polychlorobiphenyl (PCB), and high global warming potential gases such as SF6, $CF_4$, $NF_3$ and $N_2O$. There are no limitations on the type of a catalyst used for such reactions in particular. Specifically, preference is given to a catalyst which contains one or more elements selected from the group consisting of Pt, Ru, Rh, Pd, Ni, Ag, V, Au, Ce, Co, Cr, Cu, Fe, Ca, Mg, Ti, Zr, Si, P, K, La, Li, Ni, Mn, Mo, W, and Zn.

Furthermore, a reaction of a hydrocarbon-based fuel to form a hydrogen-rich gas can be carried out. In this case, a fuel-reforming catalyst is used to accelerate such a reaction. And further, to accelerate the reaction, air, oxygen, water or the like is mixed into the hydrocarbon-based fuel. Examples of the reaction form of the hydrogen-rich gas generation include partial oxidation with oxygen, steam reforming with water, and autothermal reaction with oxygen and water. The hydrogen-rich gas thus obtained can also be used as a fuel for fuel cells.

There are no limitations on the type of the fuel-reforming catalyst: a noble-metal element such as copper, palladium, rhodium, platinum, or ruthenium; aluminium, nickel, zirconium, titanium, cerium, cobalt, manganese, silver, gold, barium, iron, zinc, copper, or the like is used. Much preferably, rhodium, ruthenium, platinum, or nickel is used.

There are no limitations on the type of the hydrocarbon-based fuel in particular provided that oxygen can be generated by using low-temperature plasma. Examples of the hydrocarbon-based fuel include: hydrocarbons such as methane, ethane, and propane; alcohols such as methanol and ethanol; ethers such as dimethyl ether and diethyl ether; naphtha, gasoline, and diesel. In this case, when priority is given to ease of reforming, it is preferable to use methane or methanol. However, in the case where priority is given to its energy density such as when the apparatus is mounted on an automobile or the like, it is preferable to use a liquid fuel such as gasoline or diesel. Incidentally, the hydrocarbon-based fuel to be reformed can be used in either liquid or gaseous form.

Examples of a support for the fuel-reforming catalyst include zinc oxide, cerium oxide, aluminium oxide, zirconium oxide, titanium oxide, and the composite oxides thereof; among them, preference is given to aluminium oxide.

EXAMPLES

Electrode devices were produced as inventive and comparative examples as shown in Fig. 1.

(Example A1)

A plasma discharging electrode device 16 was produced as schematically illustrated in Fig. 2. Specifically, a dinitrodiamine-Pt aqueous solution and a cobalt nitrate solution were each impregnated with a fine alumina powder (with a specific surface area of 100 $m^2$/g), both were dried at 120°C, and then sintered at 550°C for 3 hours to give a Pt-alumina powder (with a Pt-to-alumina ratio of 10 wt %) and a Co-alumina powder (with a Co-to-alumina ratio of 10 wt %). Next, an alumina sol and water were added to these powders to give slurry. The mesh-shaped electrode 4 was immersed in the slurry, and then they were subjected to a drying process and a sintering process to produce the electrode device 16 for a plasma reactor. Thereafter, by connecting a power source between the four electrode devices as shown in Fig. 1, a plasma reactor in which an inter-electrode distance is 1 mm was fabricated.

At this time, each ceramic green sheet was formed as a multi-layer (three-layer) sheet; the layer nearest to the electrode was dried at 140°C, but the layer on the surface side was dried at 80°C. By changing the drying temperature like this, the porosity of the portion near the electrode was set at 2% and that of the surface layer 40%.

A model gas 1 comprised of $NO_x$ (200 ppm), $CO_x$ (1000 ppm), and the balance $N_2$; a model gas 2 comprised of benzene (30 ppm), $O_2$ (5%), $CO_2$ (15%), and the balance $N_2$; and a model gas 3 comprised of $N_2O$ (5000 ppm), $O_2$ (2%), and the balance $N_2$ were used. The model gases 1 to 3 heated to a temperature of 200°C were introduced into the plasma reactor, and then the quantities of NO, benzene, and $N_2O$ in the gases discharged therefrom were analyzed, whereby a. NOx purification rate, benzene decomposition rate, and $N_2O$ decomposition rate were calculated (see formulas 1 to 3). At the time of the measurement of their quantity, the gases were analyzed by means of gas chromatography (GC). Incidentally, settings on the pulse power source for plasma generation were as follows: a cycle period was set at 3 kHz, a peak voltage 8 kV, and a peak current 12A. The results of the analyses are presented in Table 1. In addition, when the reactions of the model gases 1 and 2 were carried out, the plasma reactor coating Pt was used as a catalyst; and besides, when the reaction of the model gas 3 was carried out, the plasma reactor coating Co was used as a catalyst.

(Formula 1)

$$\text{NOx purification rate (\%)} =$$

$$\frac{\text{quantity of NOx in model gas} - \text{quantity of NOx analyzed with analyzer}}{\text{quantity of NOx in model gas}}$$

(Formula 2)

benzene decomposition rate (%) =

$$\frac{\text{quantity of benzene analyzed with analyzer}}{\text{quantity of benzene in model gas}}$$

(Formula 3)

$N_2O$ decomposition rate (%) =

$$\frac{\text{quantity of } N_2O \text{ analyzed with analyzer}}{\text{quantity of } N_2O \text{ in model gas}}$$

(Example A2)

A plasma discharging electrode device was produced by using the same method as that described in Example A1; however, each ceramic green sheet was formed as a multi-layer (three-layer) sheet, the porosity of the portion near the electrode was set at 5%, and the porosity of the surface layer was set at 30%. The results of analyses are presented in Table 1.

(Comparative Example A1)

A plasma discharging electrode device was produced by using the same method as that described in Example A1; however, the porosity was set at 30% across the entire substrates. The results of analyses are presented in Table 1.

(Comparative Example A2)

A plasma discharging electrode device was produced by using the same method as that described in Example A1 except that the catalyst was used alone without generating plasma and that the porosity was set at 30% across the entire substrates. The results of analyses are presented in Table 1.

(Comparative Example A3)

A plasma discharging electrode device was produced by using the same method as that described in Example A1; however, none catalyst was used in forming the substrates. In addition, the porosity was set at 30% across the entire substrates; and besides the surfaces of the sintered substrates were covered with commercial catalyst-supported zeolite (Pt-ZSM-5). The results of analyses are presented in Table 1.

TABLE 1

|  | Ex. A 1 | Ex. A 2 | Com. Ex. A1 | Com. Ex. A2 | Com. Ex. A3 |
|---|---|---|---|---|---|
| Electrode Used | Surface Multiporous electrode | Same as Left column | Porosity 30% Electrode | Porosity 30% Electrode | Electrode covered by Catalyst-supporting zeolite |
| Porosity (%) | Surface >> Inside | Surface > Inside | Surface = Inside | Surface = Inside | Surface = Inside |

(continued)

|  | Ex. A 1 | Ex. A 2 | Com. Ex. A1 | Com. Ex. A2 | Com. Ex. A3 |
|---|---|---|---|---|---|
| N O x Purification Rate | 96% | 92% | 85% | 68% | 89% |
| Benzene Decomposition Rate (%) | 75% | 69% | 58% | 46% | 59% |
| $N_2O$ Decomposition Rate (%) | 45% | 35% | 12% | 9% | 23% |

Compared with the efficiencies of the NOx treatment, benzene decomposition and $N_2O$ decomposition conducted in Comparative Example A1, those conducted in Comparative Example A2 decrease considerably. When the catalyst was used alone, the performance of the device was poor, and therefore it can be said that the performance will be further improved through the combined use of the catalyst and the plasma.

Furthermore, it has been found that when compared with the efficiencies of the NOx treatment, benzene decomposition, and $N_2$ decomposition conducted in Comparative Example A1, those conducted in Comparative Example A3 improve. However, when compared with the NOx purification rate, benzene decomposition rate, and $N_2O$ decomposition rate calculated in Examples A1 and A3 of the present invention, those calculated in Comparative Example A3 decrease. Such results are attributable to the fact that since the solid sintered ceramic body according to the present invention has a structure in which the ceramic is completely solidified up to its surface layer, energy loss within each electrode is low and therefore gas treatment can be conducted with such high degrees of efficiency.

(Example B1)

The same plasma discharging electrode device 16 as described in Example A1 was produced, and then hydrogen generation tests were conducted as follows. Incidentally, as methods for generating $H_2$, the partial-oxidation reaction of $C_3H_8$ was conducted in test 1, the steam-reforming reaction of $C_3H_8$ was conducted in test 2, and the oxygen-added steam-reforming reaction of $CH_4$ was conducted in test 3.

In test 1, a model gas comprised of $C_3H_8$ (2000 ppm), $O_2$ (3000 ppm), and the balance $N_2$ was used. The model gas heated to 200°C was introduced into the plasma reactor heated to 200°C, the quantity of $H_2$ in the discharged gas was analyzed by means of gas chromatography with a TCD (thermal conductivity detector), and then the yield of the $H_2$ was calculated (see formula 4). Incidentally, settings on the pulse power source for plasma generation were as follows: a cycle frequency was set at 3 kHz, a peak voltage 8 kV, and a peak current 12A.

(Formula 4)

$$H_2 \text{ yield } (\%) = \frac{\text{quantity of } C_3H_8 \text{ calculated from quantity of } H_2 \text{ analyzed with analyzer}}{\text{quantity of } C_3H_8 \text{ in model gas}}$$

In test 2, a gas comprised of $C_3H_8$ (2000 ppm), $H_2O$ (6000 ppm), and the balance $N_2$ was used as a model gas. The model gas heated to 200°C was introduced into the plasma reactor heated to 200°C, the quantity of $H_2$ in the discharged gas was analyzed by means of gas chromatography, and then a $H_2$ yield was calculated (see formula 4).

In test 3, a gas comprised of $CH_4$ (5%), $H_2O$ (15%), $O_2$ (2%), and the balance $N_2$ was used as a model gas. The model gas heated to 400°C was introduced into the plasma reactor heated to 400°C, the quantity of $H_2$ in the discharged gas was analyzed by means of gas chromatography, and then a $H_2$ yield was calculated (see formula 5).

(Formula 5)

$$H_2 \text{ yield (\%)} = \frac{\text{quantity of } CH_4 \text{ calculated from quantity of } H_2 \text{ analyzed with analyzer}}{\text{quantity of } CH_4 \text{ in model gas}}$$

Incidentally, in conducting tests 1 to 3, the plasma reactor supporting Pt was used as a catalyst.

(Example B2)

A plasma discharging electrode device was produced by using the same method as that described in Example A1; however, each ceramic green sheet was formed as a multi-layer (three-layer) sheet, the porosity of the portion near the electrode was set at 20%, and the porosity of the surface layer was set at 5%. The results of hydrogen generation tests are presented in Table 2.

(Comparative Example B1)

A plasma discharging electrode device was produced by using the same method as that described in Example A1; however, the porosity was set at 30% across the entire substrates. The results of hydrogen generation tests are presented in Table 2.

(Comparative Example B2)

A plasma discharging electrode device was produced by using the same method as that described in Example A1; however, when the substrates were formed, no catalyst was added thereto. In addition, the porosity was set at 30% across the entire substrates; and besides the surfaces of the sintered substrates were covered with a commercial catalyst (Pt-alumina). The results of hydrogen generation tests are represented in Table 2.

TABLE 2

|  | Ex. B1 | Ex. B2 | Com. Ex. B1 | Com/ Ex. B2 |
|---|---|---|---|---|
| Electrode Used | Surface Multiporous Electrode | Surface Multiporous Electrode | Porosity 30% Electrode | Electrode covered with Pt- alumina |
| Porosity in Electrode | Surface> > Inside | Surface> Inside | Surface = Inside | Surface = Inside |
| $H_2$ yield Experiment 1 | 40% | 25% | 10% | 19 % |
| $H_2$ yield Experiment 2 | 42% | 28% | 11% | 23 % |
| $H_2$ yield Experiment 3 | 75% | 65% | 25% | 15 % |

It has been found that when compared with the $H_2$ yields calculated in Comparative Example B1, those calculated in Comparative Example B2 improve, but when compared with the $H_2$ yields calculated in Examples B1 and B2 of the present invention, those calculated in Comparative Example B2 decrease. Such results are attributable to the fact that since the solid sintered ceramic body according to the present invention has the structure in which the ceramic is completely solidified up to its surface layer, energy loss within each electrode is low and therefore gas treatment can be conducted with such high degrees of efficiency.

Although the present invention has been described in connection with the specific embodiments thereof, the invention is not limited to the specific embodiments and therefore may be practiced while making various changes and modifications thereof without departing from the scope of the appended claims.

**Claims**

1. A plasma discharging electrode device generating non-equilibrium plasma for treating a gas, said device comprising:

   a substrate comprising an integrated sintered ceramic body;
   an electrode embedded in said substrate; and
   a catalyst supported by said substrate and helping the reaction of the gas, wherein said substrate comprises a surface portion whose porosity is higher than that of a portion in the vicinity of said electrode in said substrate.

2. The plasma discharging electrode device of claim 1, wherein said substrate comprises a plurality of ceramic layers from the surface portion to said electrode.

3. The plasma discharging electrode device of claim 1 or 2, wherein said gas is treated to produce a product different from said gas.

4. The plasma discharging electrode device of claim 3, wherein said product comprises hydrogen.

5. The plasma discharging electrode device of claim 1 or 2, wherein said gas comprises a noxious gas which is treated to make the noxious gas harmless.

6. The plasma discharging electrode device of claim 5, wherein said noxious gas comprises a compound of at least one selected from the group consisting of an organic compound, a fluorine compound and an inorganic oxide.

Fig. 1

Fig. 2

EP 1 976 345 A1

## INTERNATIONAL SEARCH REPORT

| International application No. |
| --- |
| PCT/JP2007/050535 |

**A. CLASSIFICATION OF SUBJECT MATTER**
*H05H1/24*(2006.01)i, *A62D3/19*(2007.01)i, *A62D101/20*(2007.01)i, *A62D101/22*
(2007.01)i, *A62D101/47*(2007.01)i, *B01D53/86*(2006.01)i, *B01J19/08*
(2006.01)i, *C01B3/38*(2006.01)i, *C04B38/00*(2006.01)i

According to International Patent Classification (IPC) or to both national classification and IPC

**B. FIELDS SEARCHED**

Minimum documentation searched (classification system followed by classification symbols)
H05H1/24, A62D3/19, A62D101/20, A62D101/22, A62D101/47, B01D53/86,
B01J19/08, C01B3/38, C04B38/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2005-113706 A  (NGK Insulators, Ltd.), 28 April, 2005 (28.04.05), Par. Nos. [0001], [0003], [0023], [0024], [0028]; Fig. 1 | 1-6 |
| Y | JP 2001-130982 A  (Ibiden Co., Ltd.), 15 May, 2001 (15.05.01), Par. Nos. [0019], [0020] | 1-6 |
| Y | JP 2004-508728 A  (Saint-Gobain Ceramics & Plastics, Inc.), 18 March, 2004 (18.03.04), Par. No. [0045] | 1-6 |
| Y | JP 2005-144445 A  (Yamaha Corp.), 09 June, 2005 (09.06.05), Par. No. [0001] | 1-6 |

| ☒ | Further documents are listed in the continuation of Box C. | ☒ | See patent family annex. |

| * Special categories of cited documents: | |
| --- | --- |
| "A"  document defining the general state of the art which is not considered   to be of particular relevance | "T"  later document published after the international filing date or priority date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 23 March, 2007 (23.03.07) | 03 April, 2007 (03.04.07) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

International application No.

PCT/JP2007/050535

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 11-347342 A  (Meidensha Corp.),<br>21 December, 1999 (21.12.99),<br>Par. Nos. [0001], [0006], [0017] to [0020];<br>Fig. 1 | 2,3,5,6 |
| Y | JP 2005-35852 A  (Nissan Motor Co., Ltd.),<br>10 February, 2005 (10.02.05),<br>Par. Nos. [0001], [0040] | 4 |

Form PCT/ISA/210 (continuation of second sheet) (April 2005)

INTERNATIONAL SEARCH REPORT
Information on patent family members

International application No.

PCT/JP2007/050535

| | | |
|---|---|---|
| JP 2005-113706 A | 2005.04.28 | (Family: none) |
| JP 2005-144445 A | 2005.06.09 | US 2005/0118079 A1 |
| JP 2001-130982 A | 2001.05.15 | JP 2004-343117 A |
| JP 2004-508728 A | 2004.03.18 | US 006606234 B1<br>EP 001316110 A<br>WO 02/021590 A2<br>AU 007723701 A<br>TW 000526521 B |
| JP 11-347342 A | 1999.12.21 | (Family: none) |
| JP 2005-35852 A | 2005.02.10 | (Family: none) |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005144445 A
- JP 2004237135 A
- JP H11347342A B

- JP 2005035852 A
- JP 2005170744 A
- JP H11347342 A